(19) Europäisches Patentamt / European Patent Office / Office européen des brevets

(11) **EP 3 979 656 A1**

(12) **EUROPEAN PATENT APPLICATION**

(43) Date of publication:
**06.04.2022 Bulletin 2022/14**

(21) Application number: **21275142.4**

(22) Date of filing: **04.10.2021**

(51) International Patent Classification (IPC):
**H04N 21/262** (2011.01)  **H04N 7/15** (2006.01)
**H04N 21/4402** (2011.01)  **H04N 21/4408** (2011.01)

(52) Cooperative Patent Classification (CPC):
**H04N 21/26216; H04L 63/0428; H04N 7/15;
H04N 21/4402; H04N 21/4408**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.10.2020 GB 202015670**

(71) Applicant: **Communication Security Group Inc.
George Town, KY1-1104 (KY)**

(72) Inventor: **Currie, Mark
Guildford (GB)**

(74) Representative: **Williams Powell
11 Staple Inn
London WC1V 7QH (GB)**

(54) **ENCRYPTED GROUP VIDEO SYSTEM AND METHOD**

(57) An encrypted group video method and system are disclosed. The method includes scaling, by a first participant of a group video, the first participant's video stream to produce a first scaled video stream the scaling reducing subsequent computation or communication resource requirements for the first scaled video stream. The first scaled video stream is then encrypted and communicated to one or more participants of the group video. Responsive to a request, the video stream is scaled at a scale different to the first scaled stream to produce a second scaled video stream and encrypting and communicating the second scaled video stream to one or more of the participants of the group video.

Fig 2

## Description

Field of the Invention

The present invention relates to a system and method in which encrypted group videos can be efficiently communicated using end-to-end or group encryption.

Background to the Invention

Group video or video conferencing has become extremely popular. High quality electronic communication between family, friends, and business associates has become paramount. While traditional messaging (texting) and voice calls are still used, video is now used far more extensively than before. This has also been due to improved quality of video streaming and video conferencing methods. However, much of the reason for the improved quality has been due to server-based video manipulation techniques which minimise the bandwidth requirement on the uplink and downlink. These techniques require the video to be provided on the server in plaintext (un-encrypted) form. Even though the links to the server may be encrypted using TLS, the video and audio is exposed in plaintext form on the server. This means that the service provider and other intermediaries and eavesdroppers can record all video and audio. This is seen by businesses and individuals as undesirable.

Statement of the Invention

According to an aspect of the present invention, there is provided an encrypted group video method comprising:

scaling, by a first participant of a group video, the first participant's video stream to produce a first scaled video stream the scaling reducing subsequent computation or communication resource requirements for the first scaled video stream, encrypting and communicating, the first scaled video stream to one or more participants of the group video; responsive to a request, scaling the video stream at a scale different to the first scaled stream to produce a second scaled video stream and encrypting and communicating the second scaled video stream to one or more of the participants of the group video.

It will be appreciated that scaling can be implemented in many ways - it may be scaling of the physical dimensions of the video frames, scaling of color information in the video stream, scaling of pixel resolution, scaling of the compression rate, other forms of scaling and/or combinations of these. Additionally, although scenarios are set out where two different scalings are performed, it will be appreciated that multiple scalings can be used. Furthermore, some or all participants in the group call can operate in this manner. Scaling may be something that is negotiated during call setup or may, for example, be enabled as default and adjusted during the call.
The method may further comprise negotiating a unique key on a one-to-one basis with each of the other participants and encrypting the first scaled video stream for each recipient to be decryptable based on the respective negotiated unique key.
The method may further comprise negotiating a shared group key and encrypting the first and second scaled video streams to be decryptable by the participants based on the respective shared group key.
The steps of communicating may comprise:

communicating the encrypted first and second encrypted scaled video streams to an intermediate system;
selectively communicating, by the intermediate system, the first or second encrypted scaled video stream to each of the other participants.

The step of encrypting, by the first participant, communications to the intermediate system may use a second encryption mechanism that is independent of the encryption of the video streams.
The intermediate system may communicate with each participant with communications that use the second encryption mechanism, providing a uniquely encrypted communication stream for each participant, the uniquely encrypted communications comprising the selected first or second encrypted video stream uniquely re-encrypted using the second encryption mechanism for the respective recipient participant.
The method may further comprise the step of staggering transmission of a reference frame of the video stream in the first and second scaled video streams.
The method may further comprise the step of staggering transmission of a reference frame of the video stream with respect to reference frames in a video stream in another participant in the group video.
According to another aspect of the present invention, there is provided an encrypted group video system comprising:
a first participant system including a processor configured to execute computer program code for providing the first participant's video stream for the group video to the other participant systems of the group video, the computer program code including:

computer program code configured to scale the first participant's video stream to produce a first scaled video stream the scaling reducing subsequent computation or communication resource requirements for the first scaled video stream,
computer program code configured to encrypt and communicate, the first scaled video stream to one or more of the other participant systems of the group video;
computer program code configured, responsive to a request, to scale the video stream at a scale different to the first scaled stream to produce a second scaled video stream and to encrypt and communicate the second scaled video stream to one or more of the participants of the group video.

The encrypted group video system may further comprise computer program code configured to negotiate a unique key on a one-to-one basis with each of the other participants and encrypt the first scaled video stream for each recipient to be decryptable based on the respective negotiated unique key.

The encrypted group video system may further comprise computer program code configured to negotiate a shared group key and encrypt the first and second scaled video streams to be decryptable by the participants based on the respective shared group key.

The encrypted group video system may further comprise an intermediate system wherein the computer program code configured to communicate further comprises:

computer program code configured to communicate the encrypted first and second encrypted scaled video streams to the intermediate system; the intermediate system including a processor configured to execute computer program code for selectively communicating, by the intermediate system, the first or second encrypted scaled video stream to each of the other participants.

The encrypted group video system may further comprise computer program code configured to encrypt, by the first participant, communications to the intermediate system using a second encryption mechanism that is independent of the encryption of the video streams.

The intermediate system may be configured to communicate with each participant with communications that use the second encryption mechanism, the intermediate system providing a uniquely encrypted communication stream for each participant, the uniquely encrypted communications comprising the selected first or second encrypted video stream uniquely re-encrypted using the second encryption mechanism for the respective recipient participant.

The first participant system may include computer program code configured to stagger transmission of a reference frame of the video stream in the first and second scaled video streams.

The first participant system may include computer program code configured to stagger transmission of a reference frame of the video stream with respect to reference frames in a video stream in another participant in the group video.

While social users of group video are concerned about the lack of security, business users are extremely concerned. Many businesses rely on group video, not only for internal use, but also for customer and B2B communication. Encryption and preferably end-to-end encryption of group video has become a fundamental requirement. The challenge addressed by at least selected embodiments of the present invention is to provide the same quality of service that users have become used to with server-based video resolution scaling and manipulation.

Embodiments of the present invention seek to provides encryption and preferably end-to-end encryption between the conference participants in a resource managed and efficient manner by allowing the negotiate of uplink and downlink bandwidth requirements to and from each user and meeting those requirements by using measures such as user (endpoint) pre-scaled uplinks.

One of the main challenges is to minimise the bandwidth requirements at the endpoints. Server-based video resolution scaling and audio mixing allows each user, in the worst case, to receive the equivalent of only one full-resolution video stream. With end-to-end encryption the server does not get the plaintext video stream and therefore cannot provide scaling and optimisation of the downlink. Even in the case of group shared encryption, it is common for the server to be a dumb relay and the system deliberately so that only endpoints can decrypt the video stream.

It is relatively easy to implement end-to-end encryption where each user's encrypted video stream is simply sent to all group participants. However, this requires each user's device to handle multiple full-resolution video streams. The uplink and downlink bandwidth requirements can, however, be dramatically improved if, as in selected embodiments, the user device can send pre-scaled video streams.

In one embodiment, a method of securing group audio/video calls enables group participants to send and receive separately encrypted audio/video streams to and from each other with each stream encrypted using a unique key negotiated on a one-to-one basis with each of the other participants. Participants can request pre-scaled video from other participants.

Optionally in any of the described embodiments in this application, participants can request muted audio/video output from other participants. In another option, group participants can mute their outgoing audio and/or video to all, or selected participants.

Audio/video encryption keys may be shared by group participants and where a designated group controller generates and distributes the shared group keys.

Shared encryption keys may be exchanged using any store-and-forward messaging system whereby message recipients can fetch the exchanges at their convenience from a messaging server.

The shared encryption keys may be exchanged in real-time using a secure key establishment protocol.

Muting and/or scaling requests may be controlled by a central controlling entity which can be a server or a designated group participant.

Brief Description of the Drawings

Embodiments of the present invention will now be described, by way of example only, with reference to the accompanying drawings in which:

Figure 1 is a schematic diagram of a group video system according to an embodiment;
Figure 2 is a schematic diagram of a group video system according to an embodiment;
Figure 3 is a schematic diagram of a group video system according to an alternative embodiment;
Figure 4 is an illustration of scaling in one embodiment;
Figure 5 is an illustration of scaling in another embodiment;
Figure 6 is a schematic diagram illustrating use of reference frames in one embodiment; and,
Figure 7 shows a message encryption procedure with optional digital signature usable in embodiments.

Detailed Description

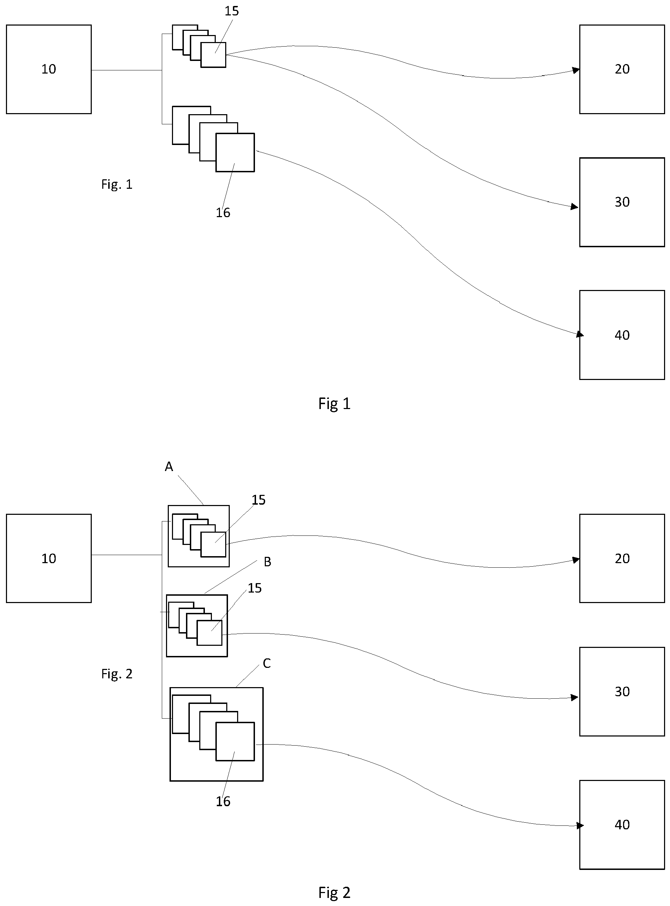

Figure 1 is a schematic diagram of a group video system according to an embodiment.

Video is captured or otherwise produced or provided for output by a first participant system 10 of a group video session. The first participant system scales its video stream to produce a first scaled video stream. The scaling reducing subsequent computation or communication resource requirements for the first scaled video stream.

The first participant system 10 then encrypts and communicates the first scaled video stream 15 to one or more participant systems 20, 30, 40 of the group video session.

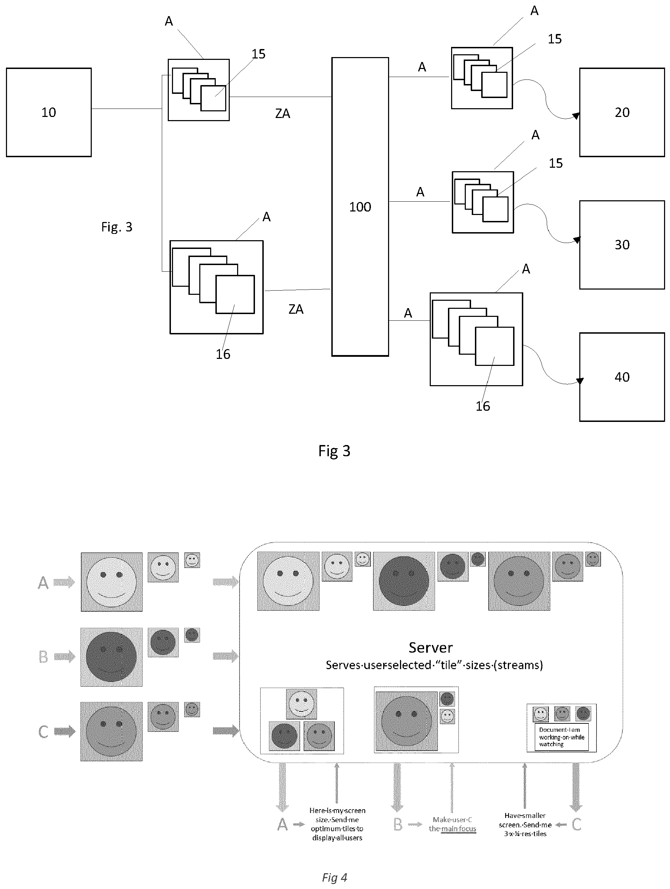

The first participant system 10 can be requested, either by one of the other participant systems 20, 30, 40 or by an intermediate system (as illustrated in Figure 3) to provide the video stream at a different scale. Responsive to the request, the first participant system 10 scales the video stream at the different scale to produce a second scaled video stream 16. It then encrypts and communicates the second scaled video stream to the requestor or to a system or systems designated by the requestor.

This arrangement could be implemented using end-to-end encryption where a unique key is negotiated between the originating participant system and each other participant system. In such an arrangement, the scaled video stream is encrypted and communicated separately to each participant system 20, 30, 40. In such an arrangement, conventional setup (for example, signalling via a SIP server) can be used in parallel or after key exchange so as to establish the group video call.

The arrangement can also be implemented using a group shared key that is distributed or otherwise made accessible to participant systems 20, 30, 40. In this arrangement, only a single version of the scaled video stream needs to be encrypted and communicated.

It may be that the encryption mechanism is a system setting. It may be that it is dynamic - for example based on bandwidth of participants and/or number of participants, switching from end-to-end where bandwidth is relatively available to a group shared key arrangement if bandwidth becomes limited, for example. Both encryption mechanisms need not be used/made available and the system could be implemented using just one (or indeed other mechanisms could be used).

Figure 2 is a schematic diagram of a group video system according to one embodiment

For real-time end-to-end encryption, keys A, B, C are dynamically established, online, between each user (point-to-point) via the signalling server (e.g. SIP server). In this case each user encrypts their audio/video stream separately to each group participant using unique keys for each stream in each direction. Since group participants must now share a separate incoming and outgoing stream with each other, bandwidth optimization is even more important. In this scenario, it is useful to allow participants to request selective muting of audio/video from other participants to limit incoming bandwidth demand.

With point-to-point (true E2EE) keying, each group participant shares a connection with the signalling server and can negotiate stream parameters directly with each other. Each participant can request their video scaling and audio/video muting requirements directly with each other in real-time.

Figure 3 is a schematic diagram of a group video system according to an alternative embodiment;

Group keying can be done through an encrypted group messaging system. This need not be done only by distributing a symmetric key for the group. A group public/private key pair can be sent instead. Group keying can be on a one-to-many basis where the group coordinator generates and distributes shared group keys or, on a many-to-many basis where participants negotiate keys between each other. Keys negotiated via secure messaging allows group participants to establish keys at their convenience before the group call.

In this embodiment, preferably two layers of encryption are used over the audio and video streams (eg. SRTP + custom). This allows the Secure Real-Time Protocol (SRTP) layer (Z) to be terminated at the server while the inner custom remains end-to-end encrypted using a shared group key (A). This will make it difficult to track speakers since the downlink encrypted streams can differ from the uplink streams. While it may be possible to track speakers based on video stream data packet lengths, the audio streams are all fixed packet lengths. Thus, with video off, it is possible to create a group audio conference where speakers cannot be tracked. Non-tracking of video could also be achieved by allowing the server to pad the downlinks at the SRTP layer. This make is difficult to correlate packet lengths between the uplink and downlink streams.

With the SRTP layer terminating at the server, it is possible to include third parties in the conference i.e. those who are not sharing the inner encryption layer. These third parties would still be secured using the standard SRTP layer. In this case the server can rescale the third-party streams as required.

In embodiments of the present invention, instead of requiring a server to scale video streams based on the number of users and individual user viewing requirements, the participant systems (user devices) send multiple streams of different video resolutions as required. It works together with the other participant systems and/or intermediate systems to determine which scaled streams are required at any point depending on individual user viewing requirements. While this can mean that the user device may need to send more than one video stream, at the worst case, the outgoing bandwidth requirement would always be less than sending two full-resolution streams. In best case scenarios, where all users are only watching small pictures of the other users, individual users only need to send a single low-resolution stream.

In the case of a group shared key, in a simplified scenario each user device would send one audio stream, one full-resolution video stream and several lower resolution video streams in an "Eye-of-Horus" series of diminishing resolution streams e.g. 1 + ½ + ¼ + ⅛ ... (always less than two full-res streams). Users would only need to transmit a new lower-res stream when someone joins the group, and conversely, remove the lowest-res stream when someone leaves the group. The server would then construct user-selectable "tiles" from the incoming streams by combining the various resolutions e.g. one hi-res + several low-res tiles or all same-res tiles without needing to decrypt the streams. In this way the downlink bandwidth requirement would never be more than the equivalent of one full-res stream (see Figure 4).

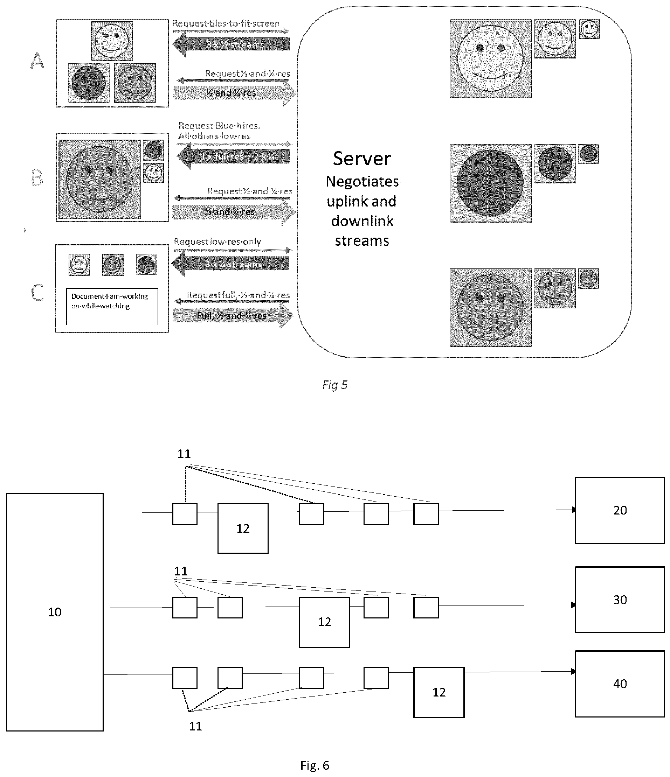

With the server dynamically determining what each user requires on their screen, a further optimisation can be implemented where the server dynamically informs senders what resolutions to send. Users can also demand which res streams to receive and this informs the server which streams to request. That way senders need not always sent the highest resolution stream (or any other resolution) if it is not required at a particular time. In Figure 5, one can see that only user C is required to send a full-res stream. This means that users can potentially send less than the equivalent bandwidth of a full-res stream making it more bandwidth efficient than conventional systems in this case. Users can also re-scale the decrypted streams themselves rather than request another stream, thus saving bandwidth on the downlink.

If a user expands the current speaker picture, the picture can immediately be scaled-up locally, albeit with no greater resolution, but the user's app immediately requests a high res stream of the target user. The server immediately returns the high res stream if available, or first requests it from the target user. On fast links this may be quick enough to replace the local lower-res, scaled-up picture and go unnoticed. Even a second or two delay would probably still be acceptable. In a typical session, with say 5 users, each user can only display a quarter-resolution picture of the other users (with perhaps a small corner picture of themselves). That means that, on average each user only needs to transmit a quarter-res stream of themselves and only needs to include a full-res stream if requested. Of course, once the full-res stream is being transmitted it becomes instantly available to anyone else that requests it. However, a user requesting a full-res stream only needs an eighth resolution of the others (in order to accommodate the large picture) but in this case they do not need to request the eighth-res streams as they can simply rescale the others to smaller sizes locally on their own machines. Scaling down gains no resolution benefit from new streams so they can simply be down-scaled locally.

Audio and video are typically sent as two different streams, and in embodiments of the present invention (end-to-end or group shared key), a similar technique can be applied with audio. To provide end-to-end encrypted audio we cannot benefit from the server mixing the Pulse Coded Modulation (PCM) streams. Therefore, each user must receive separate streams. The digital audio compression used by a user on their uplink could be varied based on the similar negotiation techniques used with the video i.e. a user could use different compression algorithms for each stream based on the requirements of the end users. However, this is only useful if a user is running out of bandwidth. Other techniques can be used as well e.g. users cannot typically handle more than about two or three simultaneous voices. Therefore, we can use this fact to minimise the number of simultaneous audio streams received. Through another layer of encryption, the server could be informed by the local user app when that user is speaking and only the speaking audio streams are sent on the downlinks. The server can then use pre-set rules to limit the number of speaker audio streams on the downlink, or even use Artificial intelligence (AI) to try to determine which of the speakers are important at a particular time and should be sent on the downlink e.g. someone who hasn't had much chance to speak up until now, or priority could be given to the conference organiser/host. We can even use an optional push-to-talk system, whereby only one audio stream needs to be received.

Figure 6 is a schematic diagram of aspects of an embodiment of the present invention. The features of Figure 6 may be incorporated with the concepts described in embodiments elsewhere in this application or could be used in a stand-alone manner.

In this embodiment, a participant system uses interpolated video streaming. Reference frames within the video stream. A full-resolution frame (a reference frame) is sent periodically by the participant system.

Frames sent in between the reference frames are interpolated frames (difference information), which are much smaller frames. For example, with mpeg encoding a full jpeg picture is sent every so often.

As is shown in Figure 6, the participant system 10 controls the positioning of the reference frame 11 compared to interpolated frames 12 so that their transmission is staggered. It may be that this is done globally (so there is staggering irrespective of the video stream) or it may be that it is done per-video-stream (so that if the same scaled video stream is sent to different participants, their reference frames do coincide but they are staggered with respect to reference frames in differently scaled video streams). Reference frames typically occur when big changes in video stream from one frame to another are detected

Staggering may be done by a participant system in isolation or it may be subject to coordination with other participant systems. For example, each participant system may have one or more designated time windows in which to send reference frames. In another alternative, reference frames may be sent as needed but the incoming streams also monitored and scheduling of reference frames controlled in dependence on timing of reference frames in streams from other participant systems.

Managing reference frames is advantageous, particularly if a participant system is sending multiple streams simultaneously as it is possible to optimise bandwidth by staggering the transmission of reference frames, whenever possible, such that only one stream is transmitting a reference frame at a time.

It will be appreciated from the above embodiments that various encryption key exchange and management mechanisms can be used. Examples of some of these are set out below.

Group messaging may be characterised by the following high-level functions:

- Group creation
- Member invitation
- Member introduction
- Sending group messages
- Receiving group messages
- Member termination
- Group termination

Four different group messaging cryptography models that may be used in embodiments of the present invention are:

1. End-to-end with unique ciphertext
2. End-to-end with shared group key
3. Message gateway
4. Broadcast / Anonymous posting

1. End-to-end model with unique ciphertext

Here, existing secure messaging apps or other out of band communications can be used to send separate messages to each member whenever we send a group message. Although this model is not very scalable, it offers the highest security and can also be implemented without requiring any changes on the servers i.e. it can be completely managed in the client app. Very high security groups are unlikely to consist of more than 10 members (or else they can't really call themselves secret), therefore this is still a valid model. There is no group key sharing, therefore member and group termination is easy and secure. Group functions such as create, send, receive, and terminate have no crypto implications and are simply application-level functions. This approach provides end-to-end security without digital signatures.

2. End-to-end model with shared group key

In this model each member has the group keys and group membership can be managed either by the group founder or optionally by any other member of the group. The server only handles distribution i.e. it only knows who to send to but not what is being sent. This model allows messages to securely terminate at each member, but each group member will receive the same ciphertext. The "end-to-end" in this case refers to message termination rather than message security. This model is therefore less secure in that one cannot cryptographically-prove who in the group sent the message, but it is far more scalable. Although all members have the group private key, group postings consist of only one message.

*2.1 Group Creation*

To create a new group for a group video, in one embodiment (that uses a group shared key) the founding member of a group (Alice) creates the group by specifying its name and registering it with the server. The server returns to Alice a Unique Identifier (UID) that will be used in all group messages to uniquely identify the group. In terms of the messaging protocol the group UID is no different from any other user UID. From the server point of view the group UID will be associated with multiple members and group messages will be distributed to members by the server. This is not a lot different from how the server might handle users with multiple handsets. To conclude the group creation process Alice generates an EC keyset for the group and saves it with her other static EC keys. She may also optionally generate a set of "group persona" keys if she does not wish to share her personal public key with all members. The group persona keys would then be used instead of her original personal keys. Other members may also opt to generate group persona keys.

*2.2 Member invitation*

Alice sends invitations via secure messaging to specific contacts on her contact list asking them to join the new group. Those who accept are then sent the group EC keys. The group EC keys are sent via secure messaging just like attachment keys are sent. Alice must also send the member public keys to the new member in the same way. The member public keys may also be the "group persona" public keys of the other members. Upon reception of the group keys the new member stores the group keys in the same secure area as their own personal static keys. The group name will then appear in the new member's contact list. The member public keys must also be linked to the group key but do not necessarily have to become new contacts. However, if a member is already on the contact list the public key does not need to be stored (only a link to the contact). Thus, in the group dialog contact members can be shown with their contact name and profile picture. Finally, Alice sends a message to the server telling it to associate the new member's UID with the group UID.

### 2.3 Member Introduction

If the group founder is introducing new members, the process is no different from member invitation. If another member wishes to introduce a new member, the cryptography does not preclude that member from sending the group keys to the new member. However, we might wish to provide the group founder (Alice) the option of allowing this or not. If not, then the new member must be introduced to Alice so that Alice can get the new member's public key i.e. the new member has to become a contact in Alice's contact list. Therefore, group member introduction requires the introducer to, firstly, be an existing member, secondly, have the prospective new member's public key i.e. they should already be on the member's contact list, and thirdly have the capability to inform the server to associate the UID's.

### 2.4 Sending Group Messages

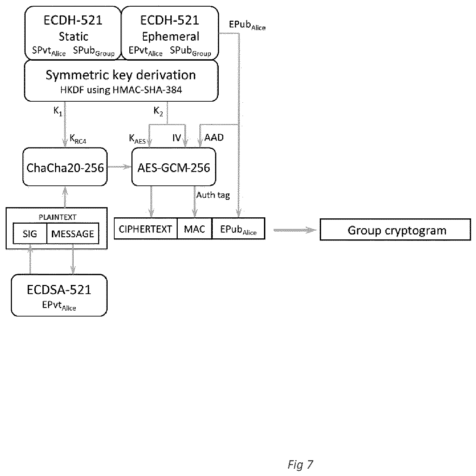

Members can send secure messages to groups just like they can to any other contact in their contact list. The sender key may be the sender's personal static EC key, or a group persona key. The target group public key is then used just like any other target peer's public key would be used for secure messaging. Figure 7 shows the message encryption procedure with optional digital signature. We could add an optional ECDSA digital signature to the plaintext before encrypting thus allowing those who have the member's public key to get proof-of-origin. Note that $SPub_{Group}$ is now used instead of $SPub_{Bob}$. Even if we add a digital signature we still need to provide the static ECDH computation so that we get implicit key authentication.

### 2.5 Receiving Group Messages

Incoming group messages can easily be distinguishable from normal peer messages since the metadata already contains both sender and recipient UID's. Therefore, the recipient recognises from the recipient UID that the group static EC keys must be used rather than the recipient's personal static EC keys. The group UID is also used by the app to determine whether to present the chat dialog as a normal peer dialog or as a group chat dialog.

### 2.6 Member termination

Member termination in the End-to-end model may require re-keying the group depending on the group security policy. Since terminated members may still retain their group keys, it is theoretically possible for them to still read group messages. However, this would require a fair amount of technical know-how and some groups may decide to ignore this threat. Note that the group founder could also be allowed to initiate a re-key at any time. The other members could also be instructed to remove the terminated member's group-associated public key so that the terminated member can no longer send messages to the group.

### 2.7 Group termination

Terminating a group would simply require the group founder to send a message to the server instructing it to kill the group UID.

### 2a. Scalable messaging with forward secrecy and OTR

This model fixes some of the problems associated with communication model 2 (E-to-E shared key). The main problems with model 2 are:

1. No proof-of-origin
2. No sender-forward-secrecy
3. All members require all other member's public keys.
4. Need to re-key each time someone leaves the group.

These problems can be mitigated to a large degree by using an ID verification server. The scheme requires an additional encryption step and for the server to use message encryption (although this step can also be done using TLS with client certificates). The scheme is described below:

### How it works

We denote the message encryption function as $E_{AB}$ where AB means that A's EC private key is used with B's EC public key. We denote $D_{BA}$ as the decryption function where B's private key is used with A's public key. Group G's EC keyset is generated and distributed to all members by the group founder. V is a message distribution server that knows the group's members but cannot read group messages. Gx is a group UID which may not necessarily be the same as a personal UID.

**Begin:**

Member A, known to the group G, as $G_A$ , encrypts a group message:

$$A: \quad M_{AG} = E_{AG}(M, G_A) \quad \textbf{(1)}$$

A then creates a server cryptogram $M_{AV}$ and sends it to V:

$$A \rightarrow V: \quad M_{AV} = E_{AV}(M_{AG}, G_A)$$

The server V decrypts and verifies that the group cryptogram originates from A:

$$V: \quad M_{AG}, G_A = D_{VA}(E_{AV}(M_{AV}))$$

The server then encrypts and distributes the group cryptogram to group members B, C & D. Server V includes A's Group public key (which may be A's personal public key) and Group ID $G_A$:
*Note that we have to include $G_A$ again even though it is encrypted in $M_{AG}$ (1) since the server cannot decrypt $M_{AG}$ to check that they are the same.*

$$V \rightarrow B: \quad M_{VB} = E_{VB}(M_{AG}, Pub_A, G_A)$$

$$V \rightarrow C: \quad M_{VC} = E_{VC}(M_{AG}, Pub_A, G_A)$$

$$V \rightarrow D: \quad M_{VD} = E_{VD}(M_{AG}, Pub_A, G_A)$$

Using server V's public key each member decrypts V's cryptogram and gains assurance that V has verified that $M_{AG}$ originated from the entity known as $G_A$:

$$B: \quad M_{AG}, Pub_A, G_A \quad = D_{BV}(M_{VB})$$

$$C: \quad M_{AG}, Pub_A, G_A \quad = D_{CV}(M_{VC})$$

$$D: \quad M_{AG}, Pub_A, G_A \quad = D_{DV}(M_{VD})$$

Finally, after decrypting $M_{AG}$ using the group private key and the received public key for $G_A$, and checking that $G_A$ matches the Gx found in the decrypted text, they are assured that group persona $G_A$ was the originator of the plaintext M:

$$B: \quad M, G_A = D_{GA}(M_{AG})$$

$$C: \quad M, G_A = D_{GA}(M_{AG})$$

$$D: \quad M, G_A = D_{GA}(M_{AG})$$

*Analysis*

We now take each negative point listed with regard to model 2 and show how they are mitigated:

1. No proof-of-origin

Here we use the server V to verify the message originator. V has the personal public keys of all the group members therefore it can verify origin. Since members also have to register their group persona ID $G_X$ with V, server V can vouch that Gx is the correct originator of the message by including Gx in the Mvx.

2. No sender-forward-secrecy

$M_{AG}$ does not retain sender-forward-secrecy since A possesses G's private key but $M_{AG}$ only exists temporarily at A **(1),** and is never directly sent over the air. It is sent encrypted with the server V's public key, therefore sender-forward-secrecy is retained since no member has V's private key.

3. All members require all other member's public keys.

With this option members use server V as a group ID verification service and therefore do not need to have the public keys of other members. They trust the public key sent to them by the server as belonging to $G_A$. They can then choose whether or not to save the public key.

4. Need to re-key each time someone leaves the group.

$M_{XG}$ messages are never sent over the air and each Mvx message can only be decrypted by the intended recipient X, so even if previous members retain G's private key they cannot decrypt group messages.

*OTR*

We can make a case for OTR (Off the Record messaging) in this scenario since $M_{XG}$ can potentially be created by anyone in the group (i.e. the basic problem of model 2). So now that we have regained sender-forward-secrecy we could say that we have OTR. Even if $M_{AG}$ is recovered from B's handset, $M_{AG}$ is a group message and has no proof-of-origin. B could have created it using G's private key together with A's public key.

*Group founder used for originator assurance*

Note that originator assurance could also be handled by the group founder if they have enough bandwidth. Everyone in the group trusts the group founder not just because they started the group but also because all members possess the group founder's public key (needed to obtain group keys) and can therefore verify origin. In this case the group founder re-sends all group messages "personally". In this role the group founder can also act as a group moderator if required.

3. Gateway-based model

In this model all sent messages terminate at a central server and are resent to each member via individual secure messaging. Only the server has the group private key. The server must have the public keys of all the group members in order to send individual secure messages. The advantage of this model is that if a member's handset is lost or stolen there is no threat to the group so long as the administrator can be informed timeously. Also, membership can be terminated without the need to re-key the group. The disadvantage is that security is not maintained end-to-end i.e. there is a Man-in-The-Middle (MiTM). Since the gateway is privy to all group messages it must be stored in a high-security facility. In some environments it might be a requirement that the key translations occur within a tamper-resistant hardware security module (HSM). This would prevent IT administrators from accessing the plaintext messages. The hardware module could then be programmed to send selectable content to a corporate executive.

*3.1 Group creation*

To create a new group the group founder, who will most likely be a corporate administrator, makes an initial connection with new members just like any new contact would. The group public key would be saved by the new member in the same way that a new contact would. There are no security/crypto implications here.

*3.2 Invitations and introductions*

These functions are probably not applicable here since membership will most probably be mandated by corporate policy.

*3.3 Sending and receiving group Messages*

There are no security/crypto implications for sending and receiving as they are handled by the client in exactly the same way as any other secure message. Each message is encrypted with a unique key.

*3.4 Member termination*

To terminate a member the server simply removes the member from the distribution list. There are no security/crypto implications (only the server has the group private key).

*3.5 Group termination*

The server must erase the group key and destroy the member distribution list.

4. Broadcasting

In this model a set of EC static keys may be preloaded with the application, or obtained in some other way. A server can then broadcast messages to a large group without needing to know the public key of each group member. This model may be useful to allow servers to broadcast friendly alerts to users about congestion status or other network problems. Since the private keys are widely distributed the security of this model is rather low but then these types of messages may not really require much security. In this model the sender need not have the public keys of all the recipients. However, the recipients can have the public key of the server and the server could also sign the messages using ECDSA.

*4.1 Anonymous group messages*

One of the side-effects of the End-to-end shared-key model is that it is possible to allow members to send anonymously to the group by using the group private key instead of their own when sending a message. This may not be of any use other than possibly allowing the creation of a "whistle-blower" group, but it may have some merit in other scenarios and may be worth thinking about. This model is essentially the same as the Broadcasting model.

It is to be appreciated that certain embodiments of the invention as discussed above may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the.

**Claims**

1. An encrypted group video method comprising:

   scaling, by a first participant of a group video, the first participant's video stream to produce a first scaled video stream the scaling reducing subsequent computation or communication resource requirements for the first scaled video stream,
   encrypting and communicating, the first scaled video stream to one or more participants of the group video;
   responsive to a request, scaling the video stream at a scale different to the first scaled stream to produce a second scaled video stream and encrypting and communicating the second scaled video stream to one or more of the participants of the group video.

2. The method of claim 1, further comprising negotiating a unique key on a one-to-one basis with each of the other participants and encrypting the first scaled video stream for each recipient to be decryptable based on the respective negotiated unique key.

3. The method of claim 1, further comprising negotiating a shared group key and encrypting the first and second scaled video streams to be decryptable by the participants based on the respective shared group key.

4. The method of claim 3, wherein the steps of communicating comprise:

   communicating the encrypted first and second encrypted scaled video streams to an intermediate system;
   selectively communicating, by the intermediate system, the first or second encrypted scaled video stream to each of the other participants.

5. The method of claim 4, further comprising the step of encrypting, by the first participant, communications to the intermediate system using a second encryption mechanism that is independent of the encryption of the video streams.

6. The method of claim 3, wherein the intermediate system communicates with each participant with communications that use the second encryption mechanism, providing a uniquely encrypted communication stream for each participant, the uniquely encrypted communications comprising the selected first or second encrypted video stream uniquely re-encrypted using the second encryption mechanism for the respective recipient participant.

7. The method of any preceding claim, further comprising the step of staggering transmission of a reference frame of the video stream in the first and second scaled video streams.

8. The method of any preceding claim, further comprising the step of staggering transmission of a reference frame of the video stream with respect to reference frames in a video stream in another participant in the group video.

9. An encrypted group video system comprising:
   a first participant system including a processor configured to execute computer program code for providing the first participant's video stream for the group video to the other participant systems of the group video, the computer program code including:

   computer program code configured to scale the first participant's video stream to produce a first scaled video stream the scaling reducing subsequent computation or communication resource requirements for the first scaled video stream,
   computer program code configured to encrypt and communicate, the first scaled video stream to one or more of the other participant systems of the group video;
   computer program code configured, responsive to a request, to scale the video stream at a scale different to the first scaled stream to produce a second scaled video stream and to encrypt and communicate the second scaled video stream to one or more of the participants of the group video.

10. The encrypted group video system of claim 9, further comprising computer program code configured to negotiate a unique key on a one-to-one basis with each of the other participants and encrypt the first scaled video stream for each recipient to be decryptable based on the respective negotiated unique key.

11. The encrypted group video system of claim 9, further comprising computer program code configured to negotiate a shared group key and encrypt the first

**EP 3 979 656 A1**

and second scaled video streams to be decryptable by the participants based on the respective shared group key.

12. The encrypted group video system of claim 11, further comprising an intermediate system wherein the computer program code configured to communicate further comprises:

   computer program code configured to communicate the encrypted first and second encrypted scaled video streams to the intermediate system;
   the intermediate system including a processor configured to execute computer program code for selectively communicating, by the intermediate system, the first or second encrypted scaled video stream to each of the other participants.

13. The encrypted group video system of claim 12, further comprising computer program code configured to encrypt, by the first participant, communications to the intermediate system using a second encryption mechanism that is independent of the encryption of the video streams.

14. The encrypted group video system of claim 13, wherein the intermediate system is configured to communicate with each participant with communications that use the second encryption mechanism, the intermediate system providing a uniquely encrypted communication stream for each participant, the uniquely encrypted communications comprising the selected first or second encrypted video stream uniquely re-encrypted using the second encryption mechanism for the respective recipient participant.

15. The encrypted group video system of claim 9, wherein the first participant system includes computer program code configured to stagger transmission of a reference frame of the video stream in the first and second scaled video streams.

Fig 1

Fig 2

Fig 3

Fig 4

*Fig 5*

Fig. 6

*Fig 7*

Europäisches
Patentamt

European
Patent Office

Office européen
des brevets

# EUROPEAN SEARCH REPORT

Application Number

EP 21 27 5142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/100228 A1 (TAPIA PABLO [US] ET AL) 25 April 2013 (2013-04-25) | 1,5,6,9, 13,14 | INV.<br>H04N21/262 |
| Y | * paragraphs [0064] – [0070] *<br>* figure 5 * | 2-4,7,8, 10-12,15 | H04N7/15<br>H04N21/4402<br>H04N21/4408 |
| | ----- | | |
| Y | 3GPP: "3rd Generation Partnership Project;Technical Specification Group Services and System Aspects;IMS media plane security (Release 8)",<br>3GPP DRAFT; 33828-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>no. Florence; 20090301,<br>1 March 2009 (2009-03-01), XP050335031,<br>[retrieved on 2009-03-01]<br>* pages 9-11 * | 2,3,10, 11 | |
| | ----- | | |
| Y | WO 2008/082375 A2 (VIDYO INC [US]; CIVANLAR REHA [TR] ET AL.) 10 July 2008 (2008-07-10)<br>* page 1, lines 13-17 *<br>* page 7, lines 13-26 *<br>* page 11, lines 1-12, 21-22, 29-32 *<br>* page 18, lines 8-19 * | 4,7,8, 12,15 | |

TECHNICAL FIELDS
SEARCHED      (IPC)

H04N

The present search report has been drawn up for all claims

| Place of search | Date of completion of the search | Examiner |
|---|---|---|
| The Hague | 8 February 2022 | Troya Chinchilla, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...............................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 27 5142

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2022

| Patent document cited in search report | | Publication date | Patent family member(s) | | Publication date |
|---|---|---|---|---|---|
| US 2013100228 | A1 | 25-04-2013 | NONE | | |
| WO 2008082375 | A2 | 10-07-2008 | CN | 103023666 A | 03-04-2013 |
| | | | EP | 1966917 A2 | 10-09-2008 |
| | | | JP | 5265383 B2 | 14-08-2013 |
| | | | JP | 2009518996 A | 07-05-2009 |
| | | | JP | 2012239184 A | 06-12-2012 |
| | | | JP | 2015080255 A | 23-04-2015 |
| | | | WO | 2008082375 A2 | 10-07-2008 |

EPO FORM P0459

For more details about this annex : see Official Journal of the European Patent Office, No. 12/82